# EUROPEAN PATENT APPLICATION

(11) **EP 4 846 828 A1**
(43) Date of publication of application: **02.12.2026**
(21) Application number: 25179983.9
(22) Date of filing: 30.05.2025
(51) Int. Cl.: A01C 1/04

(54) **SEED MAT AND METHOD FOR MANUFACTURING A SEED MAT**

(71) Applicant: NagolaRe GmbH, 03197 Jänschwalde (DE)
(72) Inventor: GRÄTZ, Christina, 03051 Cottbus (DE)
(74) Representative: Kurths, Gerrit Karsten

(57) **Abstract**

The disclosure relates to a seed mat (10) for controlled seed dispersal, especially for controlled dispersal of seeds or seed mixtures, comprising a sheet-like mat body (20) with at least one mat section (30), and multiple seed elements (40) having at least one plant seed (41) each. To protect multiple seed elements and improve on adequately providing for the growth of a multitude of plants, the seed mat (10) comprises multiple chambers (50) distributed in the at least one mat section (30), wherein a plurality of the multiple chambers (50) each contain one or more of the seed elements (40), and wherein a minimum distance (D) is formed between adjacent chambers (50). Further, the disclosure relates to a method of manufacturing such a seed mat.

## Description

The invention relates to a seed mat for controlled diaspore dispersal, especially for controlled dispersal of seed or seed mixtures according to the preamble of claim 1 and a method for manufacturing such a seed mat according to the features of claim 10.

The state of the art to date has been to spread erosion control mats made of straw and coconut fibres with standard seed mixtures. However, this method is not very sustainable or economically viable, as it wastes a proportion of the seed elements, has limitations to accommodate for local requirements nor is it 100% biodegradable. Many of these mats still contain plastic nets, nylon or silicone threads. One of the main motivations for this project was to stock the vegetation mats with regionally specific seeds native to the location area of a target application site. The 2010 amendment to the Federal Nature Conservation Act (German Bundesnaturschutzgesetz) stipulates that alien species or genetics may no longer be spread without the exceptional authorisation of the relevant authorities. This regio-seed principle means that different seeds must be incorporated into the mat depending on the geographic location and site conditions of the area to be greened. This represents a major challenge and has been addressed with this invention. Furthermore, the mat aims to be suitable for erosion-prone terrain with soil-improving properties based on renewable raw materials.

EP 0 998 848 A1 shows a degradable seed mat including a moulded fibre part as a mat body with a fibre structure. Disadvantageously, it is difficult to achieve a desired plant pattern, as the seeds are randomly dispersed inside the fibre structure. This leads to an inability of sowing multiple seeds at the same time while also ensuring adequate growing conditions for each individual seed.

An object of the present invention is thus to provide a seed mat capable of protecting a plurality of seed elements and adequately ensuring optimal growth conditions of a plurality of plants.

This object of the invention is solved by the subject-matters defined in the attached independent claims. Advantageous embodiments are defined in the dependent claims. Note that the features mentioned in the above introductory part of this description may individually or in any combination thereof also be provided in the presently disclosed solution, if not mentioned or evident otherwise.

The invention relates to a seed mat for controlled seed dispersal, especially for controlled dispersal of seed or seed mixtures, comprising a sheet-like mat body with at least one mat section, and multiple seed elements having at least one diaspore, in particular a plant seed, each.

According to a basic idea of the invention, the seed mat comprises multiple chambers distributed in the at least one mat section, wherein at least two of the multiple chambers contain one or more seed elements, and wherein a minimum distance is formed between adjacent chambers and/or between closest chambers containing a seed element.

A seed mat with multiple chambers allows for a proper protection and nutrition of the seed elements especially during the germination period of the seeds and early establishment of the seedlings. To accommodate the later growth stages of the plants, the minimum distance between the chambers advantageously permits for sufficient, preferably ideal, space between the plants for appropriate growth of target species. In combination the chambers and the minimum distance proposed by the invention increases the successful growth of multiple plants through the seed mat and can increase the overall seed application efficiency, allowing for plausible savings in seed usage, via ideally sized chambers per ground application area. Moreover, against otherwise competing aerially dispersed seeds the chambers protect the enclosed seeds and give a growth advantage to the enclosed seeds.

Seed elements may contain diaspores, especially seeds and/or fruits, and possibly coatings of the seeds and/or fruits. The mat body is preferably 100% biodegradable by using only biodegradable fibres. The mat body may comprise organic fibres and/or synthetic fibres. The mat body may comprise animal fibres and/or plant fibres. The mat body is preferably a geotextile, wherein geotextiles here can be defined as flexible, water and gas permeable sheets. A multitude of adjacent mat sections may form the mat body, especially in that a multitude of mat sections are arranged adjacently in a row in a primary direction of the mat body. Further, a size of a dimension of the at least one mat section in a main direction of the two main surface directions of the mat body may be more than one time, two times, three times, five times or ten times as large as a size of a dimension of the at least one mat section in the other main direction of the two main surface directions. The chambers are located inside the mat body and are covered from all sides by a fibre matrix, the fibre matrix being described in more detail below. The chambers may be spaces inside the mat body for storing and/or enclosing the at least one seed element, especially in that the chambers have a calotte shape, a spherical shape, a parabolic shape, or an ellipsoidal shape and/or parts of these shapes. The chambers in the at least one mat section may be arranged in accordance with a predetermined pattern and/or may be arranged in predetermined minimum distances between each other. The pattern may comprise one or more rows and/or one or more columns, especially wherein the chambers are evenly distributed in the one or more rows and/or in the one or more columns, especially preferred wherein the pattern of a row is selected from various types of rows and/or wherein the pattern of a column is selected from various types of columns. The pattern may be a line pattern, i.e. multiple of the chambers are arranged in a line, a grid pattern, i.e. multiple of the chambers are arranged in an evenly spaced grid, a wave pattern, a cluster pattern, a path pattern, or at least a partial or completely random arrangement, yet adhering to the minimum distance between neighbouring chambers. The minimum distance may be at least 4cm, preferred 5cm, especially 6cm, 7cm, 8cm, 9cm, up to 30cm, preferably up to 20cm. The minimum distance may be determined as a function of the requirements of the seed elements, i.e. specific space requirements of the developing plant species. The minimum distance may also be based on a parametric requirement of the average water demand of the plant, and/or the average potential that the location can supply accordingly. In addition to the seed elements, the chamber may house additional material, for example nutrients, moisture retaining material, soil conditioner, biofertilizer, bio stimulant, microbiome stimulants, phytohormones, plant growth bioregulators and/or plant protection agents. Alternatively or additionally, the seed elements may comprise additional material, for example nutrients, moisture retaining material, soil conditioner, biofertilizer, bio stimulant, microbiome stimulants, phytohormones, plant growth bioregulators and/or plant protection agents.

According to an embodiment of the invention the mat body may comprise a non-woven, especially wherein the non-woven may comprise a fleece structure, and in that the non-woven may contain a fibre matrix structure. Non-woven materials have better water permeability than moulded fibre parts, allowing for more efficient capillary action and improved seed germination. A non-woven can provide a more intimate contact between the seeds and soil, promoting better germination and growth. Non-wovens tend to be more flexible than moulded fibre parts or other materials, allowing for easier handling and manipulation of the seed mat during application. Moreover, non-wovens may be produced using cost-effective methods, such as dry-laid, especially air-laid, or wet-laid non-wovens. Advantageously, non-woven materials may contain carrying and filling fibres to increase the surface size of the mat body and facilitate biodegradability at later plant growth stages when the plant has gained sufficient strenght of its roots and stem, wherein woven materials contain only carrying fibres. Fibres of the fibre matrix structure may comprise or consist of animal fibres, especially sheep wool. Alternatively, or additionally, fibres of the fibre structure and/or the matrix structure may comprise or consist of plant fibres, in particular wherein the plant fibres are hemp fibres, and/or flax fibres, and/or bast fibres. Further, the fibre structure and/or the matrix structure may contain a mixture of animal fibres and plant fibres. In general, the fibre structure and/or the matrix structure may consist of unstructured, sheetlike plant components, especially bast fibres, foliage, or stalk walls. Furthermore, an animal fibre and/or plant fibre content in the mat body, especially in at least an envelope layer and/or in at least a hull layer of the mat body (as described below), is chosen based on a surface area and/or roughness of the animal fibre and/or the plant fibre. Preferably, the mat body comprises non-woven animal fibre, especially having a specific weight between 120 g/m² and 170 g/m², in particular 150 g/m². In a preferred embodiment, the mat body may comprise an animal fibre content of up to 70%, 60%, 50%, 40%, 30%, 20% preferably up to 10%.

According to a further embodiment of the invention the mat body may comprise a fibre matrix of plant and/or animal fibres. Producing the seed mat from renewable resources advantageously renders the seed mat biodegradable and cost effective. Moreover, the biodegradable nature of these fibres allows for composting, reducing waste and creating an organic soil amendment, in particular creating a natural soil replenishment with carbon and other nutrients. The fibre matrix may comprise multiple fibres that are randomly intertwined. The fibres of the fibre matrix may be arranged in an unstructured grid to form the mat body. The fibres of the fibre matrix may be animal fibres, especially sheep wool. Further, the fibres of the fibre matrix may be plant fibres, in particular wherein main compounds of the plant fibres are cellulose, hemicellulose, and/or lignin, especially wherein the plant fibres are hemp, flax, and/or bast fibres. In particular, the fibre matrix may consist of unstructured, sheetlike plant components, especially bast fibres, foliage, or stalk walls. Preferably, the fibre matrix contains a mixture of plant and animal fibres in order to increase diversity. Even more preferably, the fibres of the fibre matrix are arranged in an unstructured manner which also reduces the costs for production of the seed mat.

The fibre matrix may have a specific weight between 100 g/m² and 600 g/m², in particular 120 g/m² and 550 g/m². Furthermore, the mat body may comprise a plant and animal fibre matrix containing 30 to 90 weight-% plant fibre, preferably 40 to 80 weight-% plant fibre, especially 50 to 70 weight-% plant fibre. Additionally, the fibre matrix may contain synthetic fibres, in particular biodegradable synthetic fibres.

In particular, the fibre matrix may consist of hemp and wool fibres having a specific weight between 100 g/m² and 500 g/m², in particular 120 g/m² and 450 g/m². Furthermore, the mat body may comprise a hemp and wool fibre matrix containing 30 to 90 weight-% hemp, preferably 40 to 80 weight-% hemp, especially 50 to 70 weight-% hemp. The mat body may entirely consist of the hemp and wool fibre matrix.

Alternatively, or in addition, the mat body may comprise a flax and wool fibre matrix having a specific weight between 120 g/m² and 600 g/m², in particular 160 g/m² and 550 g/m². Furthermore, the mat body may comprise a flax and wool fibre matrix containing 30 to 90 weight-% flax, preferably 40 to 80 weight-% flax, especially with 50 to 70 weight-% flax.

In yet another embodiment, or in addition, the mat body may comprise non-woven pure wool, especially having a specific weight between 120 g/m² and 170 g/m², in particular 150 g/m².

These specific fibre matrices each exhibit unique and advantageous properties, as sheep wool, hemp, bast and flax fibre combinations, which are adjusted to the application area to enhance the performance of the seed mat in water retention, insulation, and/or UV protection. The type of fibre ideally chosen for the fibre matrix may depend on its surface and/or roughness and/or properties including hydrophobicity, hydrophilicity, swelling capacity, flexibility.

According to yet a further embodiment of the invention, the mat body may comprise two envelope layers, wherein one or both envelope layers form the chambers and envelope the seed elements. The use of two envelope layers improves the protection of the seed elements and facilitates the arrangement of the seed elements in the mat body. Therein, the use of exactly two envelope layers may advantageously be an ideal way of production while covering the seed elements from both sides. Further mat body layers may be arranged on an outside of the envelope layers, i.e. arranged at a side of the envelope layers facing away from the seed elements. Each of the envelope layers or of the further mat body layers may have the properties discussed above in relation to the mat body. These properties include but are not limited to the fibre matrix, the plant and/or animal fibre content and the fibre arrangement inside the layer of the mat body.

According to a preferred embodiment of the invention, at least one of the envelope layers comprises a pre-shaped bulged section to form a side of a chamber. Advantageously, the bulged sections can form more defined chambers, allowing for a more controlled seed distribution and optimised root-to-soil contact and seed-to-fibre contact, which can improve emergence rates. Further, the pre-shaped bulges may help to create a more uniform and controlled release of seeds into the soil. The bulged sections can provide a desired structural integrity to the seed mat, especially to the peripheral areas of the chambers, and can provide weakened sections in the areas of the chambers to allow for a facilitated growth of the plants in a vertical direction. Preferably, the other one of the two envelope layers is stretched over the bulged section to form a cover section of said chamber, especially wherein the bulged section is formed in a lower envelope layer in a laid-out state of the mat. The cover section may be stretched across the bulged section to create a taut, snug and/or tight environment for the seed element inside the chamber. This arrangement allows for a minimum of manipulation of the envelope layer during production, and thus, reduces the overall cost of the seed mat, while maintaining the further advantage of preferably ideal space between the seed elements and the later grown plants.

Further, at least a first envelope layer of the envelope layers may be compacted and/or rolled, especially in that in a laid-out state of the seed mat only the lower envelope layer may be compacted and/or may be rolled. Moreover, the other, i.e. the second envelope layer of the envelope layers, especially the upper envelope layer, may not be compacted. The second envelope layer may be less compacted than the first envelope layer. At least one of the envelope layers may have a compacted layer section, especially wherein the compacted layer section is adjacent to the chamber. The compaction area of the envelope layers may be limited to the compacted layer section. Further, the bulged section and/or the cover section may be a reinforced, especially compacted and/or compressed section. The compacted layer and/or the compacted layer section may be a mechanically and/or thermally compacted layer section, especially a rolled compacted layer section.

According to a further preferred embodiment of the invention, the two envelope layers may be connected by needling and/or stitch bonding, especially the stitch bonding comprising fibres of either one or both of the two envelope layers, in particular in that the needling and/or the stitch bonding between the two envelope layers comprises at least 5 stitches/cm², in particular 25 stitches/cm², up to 100 stitches/cm². The needling and/or the stitch bonding provides for a strong and durable connection, enhances the durability of the mat body and improves the containment of the seed elements, thereby reducing the likelihood of seed leakage or uneven distribution. A further advantage of the stitch bonding is that the plants still are able to grow in an unhindered manner, compared to planar layer connections such as compaction, thermal bonding or glueing. Moreover, a lower number of stitches between 5 to 25 stitches per cm² speeds up the manufacturing process. A higher number of stitches between 10 and 100 stitches per cm² provides a stronger and more durable stitch bonding between the envelope layers, reducing the risk of seam failure or opening during use. In a preferred embodiment, the stitch bonding has a stitch density of 5 to 100 stitches/cm², in particular 20 to 80 stitches/cm², especially 75 stitches/cm². The stitch bonding may be located in areas outside the chambers, and may especially be limited to the areas outside the chambers. The stitches may consist of transfer fibres. The transfer fibres may be hooked fibres from the fibre matrix of one of the envelope layers extending at least partially through the mat body in a direction perpendicular to the surfaces of the mat body.

Additionally, or alternatively, the two envelope layers might be connected by compaction, thermal bonding, heat welding and/or glueing.

In another preferred embodiment of the invention, a dimension of the chambers may have a size corresponding to the seed elements to create a taut, snug and/or tight environment for the seed element. The dimension may be a diameter, a depth or other geometric parameters of the chambers. The customized chamber size ensures that each seed element is placed in an optimal position that allows maximum contact with the surrounding soil and promotes successful emergence and establishment. The taut, snug and/or tight environment created by the chambers' dimension allows for uniform spacing between seeds, reducing competition between seedlings and promoting uniform growth. The precise fit of each seed element in the corresponding chamber ensures optimal contact between soil and seed. The chambers may have a depth between 1 and 9 mm and/or a smallest diameter between 4 and 40 mm and/or a largest diameter between 6 and 50 mm. The chamber's dimension preferably depends on the nature and/or size of the seed elements. A taut environment means that little additional pressure is exerted against the seed elements. A snug environment means that the seed elements are supported from multiple sides to stay in place. A tight environment means that the space inside the chambers is reduced to a possible minimum to reduce movement of the seed elements inside the chambers and/or between the layers.

According to a further embodiment of the invention, the at least one chamber may have a predetermined breaking section. The predetermined breaking section may preferably have the form of a point, a line, a cross and/or circle, and/or may be a weakened section of the chamber and/or a perforation of the chamber to the surrounding. The predetermined breaking sections allow the seedlings to emerge in a controlled manner when the bottom envelope is punctured for rooting into the soil and/or the seedling's leaflets are pierced upwards. This ensures that the seedlings are not damaged during early growth. The breaking section can be designed to accommodate different soil types and/or seed types, allowing the seed mat to perform well in a variety of conditions. Further, the breaking section may facilitate growth of a stem or a root of the plant through the mat body, while the mat body has not degraded yet and still effectively protects the substrate against erosion processes.

According to another embodiment of the invention, the mat body, in particular the chambers, and/or at least a surface of the chambers and/or peripheral sections of the chambers, and/or fibres of the mat body and/or surface-adjacent fibres of at least one of the chambers and/or the seed elements may at least partially contain a coating selected from the group comprising a structural coating and/or an organic coating and/or a bioactive coating and/or a microorganism coating and/or a supplementation, especially wherein the coating is covering at least one type of animal fibre and/or at least one type of plant fibre of at least a part of the mat body. Moreover, the fibres of the bulged section and/or the peripheral sections between chambers and/or the cover section may be coated, especially with a coating containing microorganisms and/or nutritional components. In a preferred embodiment, the peripheral section is a strip between chambers. Further, only the fibres of selected section of the chambers may be coated, while the fibres of other section remain uncoated. A combination of both methods, i.e. full coating or strip coating, can be used if two or more different coatings are applied and different combinations of areas of coated and/or uncoated fibres may be applied at different mat sections or different sub-sections of the mat sections. A coating may be a permanent and/or loose layer or a wetting agent with one or more layers. A structural coating configures the mechanical properties of the fibres and/or seeds of the seed elements and may comprise mineral, clay, silicate, in particular amorphous silicate, and/or biodegradable synthetic adhesives. An organic coating may consist of non-living, charcoal, biochar and/or natural adhesives, especially polysaccharides and/or proteins. A bioactive coating may comprise enzymes and/or hormones. A microorganism coating may contain life supplements. Microorganisms may be bacteria, in particular cyanobacteria, microalgae, especially green algae, fungi and/or their respective parts. Supplementation may for example refer to additional granules. Advantageously, the coating and/or supplementation can introduce beneficial microorganisms into the mat, promoting a healthy soil microbiome that supports plant growth and development. Beneficial microorganisms can make essential trace elements that are already present in the soil accessible to the plant. The bioactive coating can stimulate seed germination by providing relevant enzymes, hormones, or other growth promoters that initiate germination and/or enhance seedling establishment. The organic coating can release nutrients as it breaks down, providing slow-release fertilizing effects that benefits the developing plants. The structural coating can improve soil porosity, water infiltration, and aeration, creating a more favorable environment for plant growth. The bioactive or microorganism coating can be used for a targeted degradation pattern of the fibres of the mat body, improving pre-determined bio-degradation speeds. The combination of beneficial microorganisms, nutrients, and/or bioactives in the coating can promote healthy seedling establishment, reducing the risk of disease and pests. The bioactive or organic coating can reduce the need for synthetic fertilizers and pesticides, promoting a more sustainable and environmentally friendly approach to agriculture. By providing essential nutrients and microorganisms, especially bacteria, in particular cyanobacteria, microalgae, especially green algae, fungi and/or their respective parts, the coating can enhance plant growth and development, leading to increased plant yields and improved farm productivity.

Moreover, the fibres of the cover section may be coated with one or more of any of the coatings stated above. A composition of the microorganism coating may be chosen based on a surface area and/or roughness of the animal fibre and/or plant fibre. Further, the mat body may comprise an inoculated layer and/or a coated layer containing nutritional substances and/or microorganisms and/or aggregates thereof. Furthermore, surfaces of at least one of the chambers, especially surface-adjacent fibres of the chamber, may comprise an inoculated layer and/or a coated layer. Moreover, peripheral sections of the chambers of the mat body, especially of at least one of the envelope layers, may comprise an inoculated layer and/or coated layer. Further, the inoculated layer and/or the coated layer contains aggregates, especially nutritional substances and/or microorganisms to increase bioavailability of available nutritional substances and/or microorganisms, especially bacteria, in particular cyanobacteria, microalgae, especially green algae, fungi and/or their respective parts. The inoculated layer and/or the coated layer may comprise humus.

A further aspect of the invention relates to a method for manufacturing a seed mat as described above. The method is characterized through the steps,
- parametrizing the chambers and/or their distances from each other, wherein at least one parameter of the chambers and/or their distances from each other is determined on the basis of average plant sizes, average plant water demands, and/or space requirements of the plants during germination and/or growth,
- continuous production of the mat body via a roller system comprising at least one roller with multiple dies and/or knobs adapted to at least one parameter of the chambers and the minimum distance between the chambers,
- forming of the chambers with the minimum distance in the mat body through rolling the mat body with the roller with the multiple dies and/or knobs adapted to the minimum distance,
- filling the seed elements into the chambers.

The step of parametrizing allows for precise determination of the chamber sizes and spacing based on average plant sizes, water demands, and space requirements, ensuring optimal conditions for seed germination. The continuous production using a roller system with adapted rollers enables high-speed manufacturing while maintaining accuracy and consistency in the mat body's structure. Further, the rolling process with multiple dies and/or knobs ensures uniform chamber formation and spacing throughout the mat body, minimizing variability and ensuring consistent seed placement. Moreover, the method allows for easy filling of seed elements into the chambers, as the chambers are already formed and arranged in the mat body during the production process. Overall, this method enables the efficient and precise manufacturing of high-quality seed mats with optimal chamber sizes and spacing, which can lead to improved seed germination rates, reduced waste, and increased plant yields. It is possible to have different parameters for different chambers in one mat body. The parameters may vary across mat sections or be the same in one mat section and different in another mat section. This may be accomplished by exchanging the rollers or have different rollers active at different stages of the production line.

Before the step of continuous production, a step of spanning of the mat body or a part of the mat body may be carried out, especially wherein the mat body is spanned in a main direction, i.e. a longitudinal direction of the mat body, by pulling the mat body with a greater force in the longitudinal direction than with a force in a lateral direction. To further increase efficiency, the mat body may be rolled up before unrolling to feed the mat body into the rollers.

A heated spot weld to connect the layers maybe used in conjunction with the roller system and/or the press. In particular, biodegradable thermos-bioplastic beads may be positioned and melted at defined intervals between the chambers and/or coatings.

According to a further embodiment of the invention, the method for manufacturing comprises the step of feeding at least two, especially exactly two, envelope layers into the roller system for the continuous production of the mat body. The use of two envelope layers allows for the creation of precise and consistent chamber shapes, as each layer can be designed to perform a specific function. For example, one layer can form the chamber walls and floor, while the other layer creates the chamber ceiling. Further, the two envelope layers can work together to create a precise and controlled environment for seed placement. For example, one layer can hold the seed elements in place, while the other layer ensures they are evenly spaced and securely positioned. Only one of the layers may be fed to the roller with multiple dies and/or knobs. This improved chamber formation and enhanced seed placement enable the production of high-quality seed mats with precise control over chamber size, shape, and seed placement, leading to optimized germination rates and plant yields.

According to a preferred embodiment of the invention, the method for manufacturing comprises the further step of feeding transfer fibres through the envelope layers by needling with needles creating a stitch bonding between the two envelope layers, in particular after filling of the seed elements into the chambers, wherein the transfer fibres are hooked fibres from the fibre matrix of one of the envelope layers. In particular, the needles may comprise barbs in order to take along fibres from the fibre matrix and utilize them as the transfer fibres. The transfer fibres can be used to bond the envelope layers together, creating a strong mat body that permanently resists re-separation into upper and lower layers (durability). This may be especially important for seed mats that are designed to break down/disintegrate/decompose slowly over time, as it ensures the mat remains intact until the seeds respectively seedlings have emerged, ensuring the exact location of each seed element and subsequently each plant. By incorporating the transfer fibres into the manufacturing process, this method enables the creation of high-quality seed mats that not only provide optimal conditions for seed germination but also exhibit improved durability while reducing production costs.

According to a further preferred embodiment of the invention, the method wherein the step of forming and arranging of the chambers includes forming bulged sections of the chambers in a first of the two envelope layers and spanning the other of the two envelope layers over the first envelope layer. By forming the chambers in one layer, then covering them with another layer by preferably stretching the other layer over the first layer, and in particular permanently attaching the two layers together, the mat body becomes more robust and less prone to damage or disintegration. Further, this method allows for an even more secure placing of the seed elements while keeping the production costs low. Using the first layer as the lower layer when placing the seed mat, the mat body can better anchor itself in the soil, reducing the risk of washaway or erosion. Using the first layer as the upper layer when placing the seed mat, may advantageously improve the growth of the plants out of the chamber.

According to yet another embodiment of the invention, the method for manufacturing comprises the additional step of slitting, perforating and/or punching the chambers via blades and/or needles, in particular the blades and/or needles being arranged on rollers. The use of rollers with blades and/or needles allows for precise control over the slitting, perforating, and/or punching process. This enables the creation of consistent chamber sizes, shapes, and patterns, which is crucial for seedling emergence and growth. The rollers can be designed to maintain a consistent speed and pressure, ensuring that each chamber is treated uniformly. This reduces variability in the seed mat's properties and performance, leading to more predictable results in agricultural applications. The slitting, perforating, and/or punching process can be used to create specific features or patterns within the chambers, such as slits for improved water penetration, perforations for enhanced aeration and/or punching patterns for controlled seed release. Advantageously, these features can be tailored to specific plant species, soil conditions, or environmental factors, allowing for the creation of customized seed mats.

According to another preferred embodiment of the invention, the method comprises the additional step of spraying, soaking, dipping and/or painting the mat body, in particular the chambers and/or the peripheral sections of the chambers, and/or fibres of the mat body and/or the seed elements at least partially with a covering agent selected from a group comprising a bacterial solution, an algae solution, a solution containing non-living, charcoal, biochar and/or natural adhesives, in particular polysaccharides and/or proteins, a solution containing enzymes, a solution containing hormones, a solution containing life supplements and/or a chemical treatment, in particular a plant protection agent or a plant growth bioregulator, to create a coating. Further ways of applying the coating comprise dipping the mat in the covering agent and/or painting the mat at least in part with the covering agent. The covering agent can be designed to promote beneficial microbial growth on the fibres and/or within the chambers of the seed mat. This can lead to improved soil health, increased nutrient cycling, and enhanced plant growth and promote higher seed germination rates and faster seedling establishment. By selecting specific bacteria and/or algae species for the coating, the coating can be tailored to the microbial profile to suit specific plant species needs, soil types, and environmental conditions. The step of spraying, soaking, dipping and/or painting the covering agent may be done at every production step of the method of production.

In the following, an embodiment of the invention will be described with reference to the attached schematic figures. Features which correspond to one another with regard to their type and/or function may be assigned the same reference signs throughout the figures.
- Fig. 1: shows a schematic illustration of a seed mat according to a first embodiment of the invention.
- Fig. 2: shows a detailed view of seed mat according to the first embodiment of the invention.
- Fig. 3: shows a schematic illustration of a seed mat according to a second embodiment of the invention.
- Fig. 4: shows a flow diagram illustrating the steps of a method of production of a seed mat according to the invention.

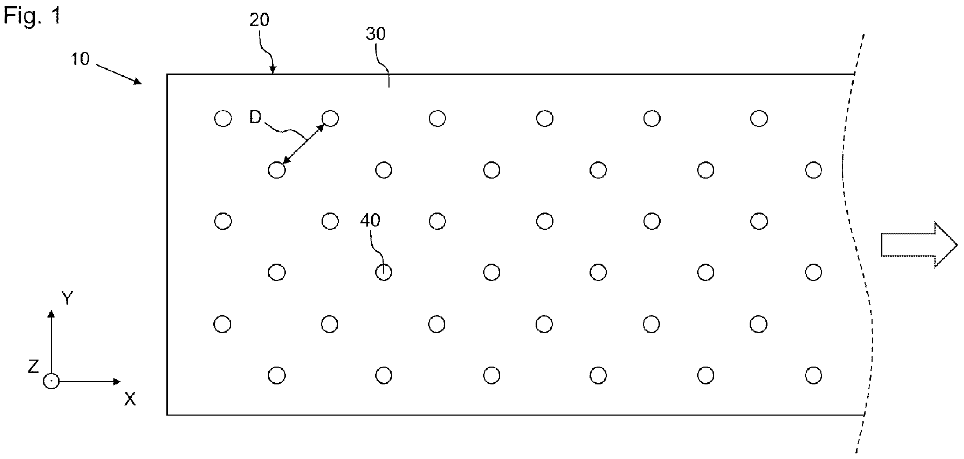

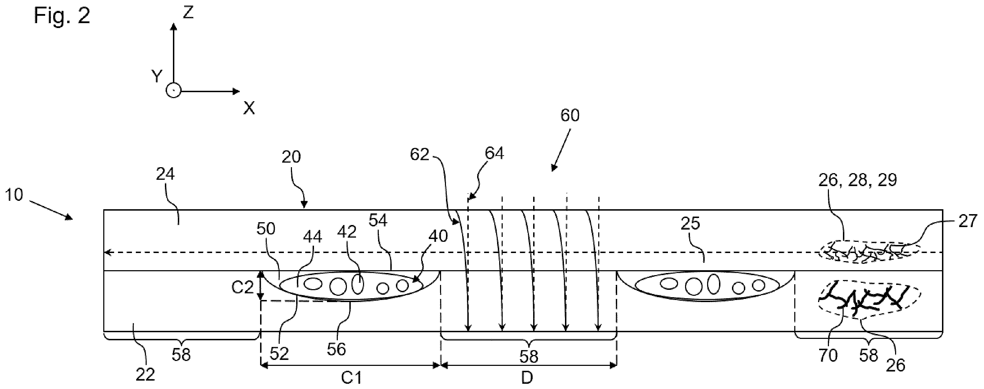

In Fig. 1 and Fig. 2 a first embodiment of a seed mat 10 according to the invention is shown.

Fig. 1 depicts a sheet-like mat body 20 comprising at least one mat section 30, while Fig. 2 displays a cross-sectional side view of the mat body 20.

As can be seen in Fig. 1, the mat body 20 features multiple chambers 50 distributed throughout the at least one mat section 30. Each chamber 50 contains one or more seed elements 40, which are comprised of at least one diaspore 42 each. In this case, the diaspores 42 are plant seeds. A minimum distance D is maintained between adjacent chambers 50. Dimensions C1, C2 of the chambers 50 and the minimum distance D are based on a parametric requirement of the seed elements, for example the size of the seed elements 40 and average plant size when the plant is fully grown. To determine the dimensions C1, C2 of the chambers 50 the size of the seed element 40 reduced by a margin is taken, to easily create the taut, snug and/or tight environment. To determine the minimum distance D, an average size of the plant may be determined and then an additional space is added to accommodate for cast shadows and water demand of the plant, such that a competition of individual plants is minimized when fully grown. The mat body 20 extends far more in a longitudinal direction X than in a lateral direction Y or a vertical direction Z.

The mat body 20 consists of a non-woven 28, specifically a fleece structure 29, and incorporates a fibre matrix 26. The fibre matrix 26 consists of hemp and wool fibres and has a specific weight of 120 g/m².

As displayed in Fig. 2, the mat body 20 comprises two envelope layers 22, 24 that form the chambers 50 and envelop the seed elements 40. In this embodiment a lower first envelope layer 22 features a pre-shaped bulged section 52 to define a side of a chamber 50. An upper second envelope layer 24 is stretched over the first envelope layer 22 covering the bulged sections 52 with cover sections 54. The fibre matrix 26 of each of the envelope layers 22, 24 may be warped in the respective way to accommodate for the bulged section 52 and/or the cover sections 54. At least one of the two envelope layers 22, 24 may comprise a compacted layer 25 or be a compacted layer. In this particular example the upper envelope layer 24 has a compacted layer 25 facing the first lower envelope layer 22, said compacted layer 25 being created by applying a heated roller a thus thermally shrinking and compressing the fibres 27 of the fibre matrix 26.

The two envelope layers 22, 24 are connected by stitch bonding 60, which consists of fibres 62 derived from either one or both of the two envelope layers 22, 24. The stitch bonding 60 exhibits a minimum density of at least 5 stitches per cm². A path 64 of the needles is displayed using dashed lines. The stitches are preferably made during the production process with barbed needles, wherein in this particular embodiment the needles hooked the fibres of the fibre matrix 26 of the upper second envelope layer 24 and carried the fibres through both envelope layers 22, 24 to create the stitch bonding 60 and thus, a tight mat body 20. In another embodiment and depending on the length of the individual fibres, the needles might produce a loop with the fibres, carrying the fibres back through the envelope layers 22, 24.

Fig. 2 also shows that an dimension C1, C2 of the chambers 50 has a size corresponding to the seed elements 40, thereby creating a taut, snug and/or tight environment for the seed elements 40. The displayed dimensions of width C1 and of depth C1 are only examples of dimensions that may correspond to the seed elements 40. The taut, snug and/or tight environment can help regulate the conditions necessary for optimal seed germination, such as pressure, temperature, humidity, and light.

Furthermore, at least one chamber 50 features a predetermined breaking section 56. This allows for controlled dispersal and/or growth of the seed elements 40 when the mat is subjected to external forces or stress or to internal forces when the diaspores 42 are germinating and growing roots and stems of the plant. The breaking section 56 might be adapted to the growth requirements of the diaspore 42 or the plant seed. Therefore, different chambers 50 might have different breaking sections 56.

The sections of the mat body 20 arranged between the chambers and at the edges of the mat body 20 outside of the chambers 50 are referred to as peripheral sections 58 of the chambers 50. These peripheral sections 58 preferably serve as connecting areas of the envelope layers 22, 24. Preferably the stitch bonding 60 is arranged in the peripheral sections 58.

Additionally, the mat body 20, including the chambers 50 and/or peripheral sections 58 of the chambers 50, as well as the fibres 27 of the mat body 20 and/or the seed elements 40, may at least partially contain a coating 70 selected from the group comprising a structural coating, an organic coating, a bioactive coating, a microorganism coating, and/or a supplementation. This coating can be applied to at least one type of animal fibre and/or at least one type of plant fibre that is part of the mat body 20. The coating 70 may be applied only to certain fibres or areas of the mat body 20, as in the current embodiment, the coating 70 is only applied to the lower first envelope layer 22 to improve seed germination or plant growth and unaffecting the costs of the upper envelope layer 24, keeping the overall cost of the seed mat 10 low.

The seed mat 10 according to this first embodiment of the invention offers a controlled dispersal system for seeds or seed mixtures, providing a taut, snug, and/or tight environment for the seed elements and allowing for controlled release of the seeds under external forces.

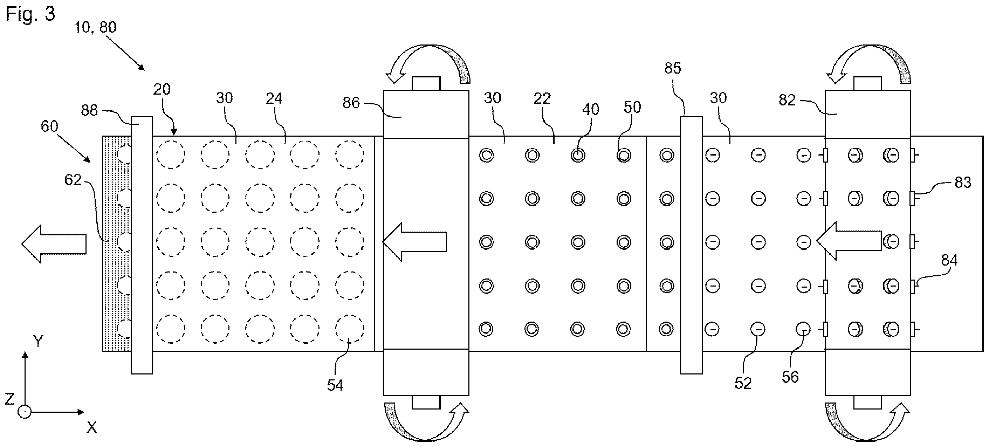

Fig. 3 shows a second embodiment of the seed mat 10 according to the invention, having multiple sections 30 of the mat body 20 aligned in a row in the longitudinal direction X of the seed mat 20. Further, a schematic roller system 80 for use in the method of production 100 of the seed mat 10 is displayed.

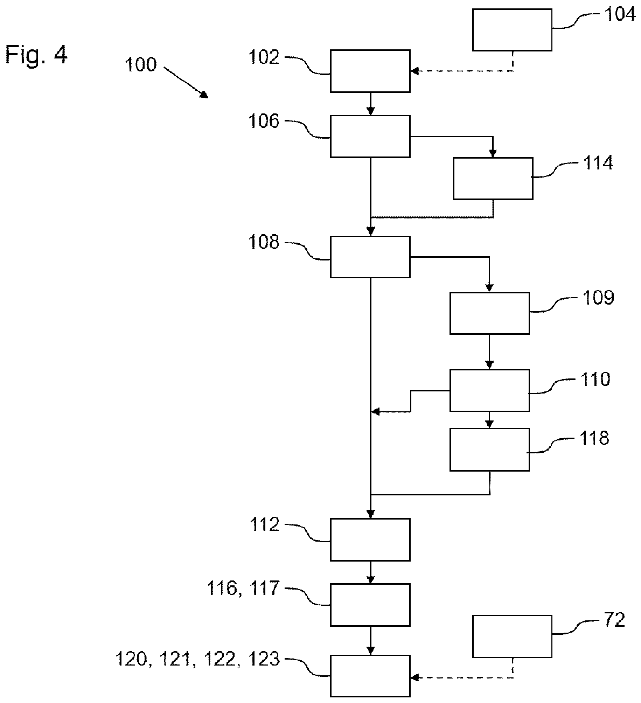

The seed mat 10 is being produced according to a method 100 of the invention shown in a flow diagram in Fig. 4. The mat body 20 is pushed in the direction indicated by the arrows.

At first, the lower first envelope layer 22 is being rolled by a first roller 82 with multiple dies 83 and/or knobs 83 to create the bulged sections 52 of the chambers 50. The dies 83 and/or knobs 83 exhibit a blade 84 each to create a breaking section 56 in the chambers 50. Herein, the distance of the multiple dies 83 and/or knobs 83 is selected according to parameters of the germinating and grown plants of the seed elements 40 and the minimum distance D between adjacent chambers 50.

In a next step, the seed elements 40 are placed inside the bulged sections 52 of the chambers 50 by a seed element injector 85. The seed elements 40 may be placed inside the bulged sections 52 through a press and/or a scatterer being part of the seed element injector 85.

Next, by feeding and spanning the second envelope layer 24 and rolling it over the first envelope layer 22 by a plain roller 84, the mat body 20 is completed. This creates covering sections 54 above the bulged sections 52 to cover the seed elements 40 and to create a taut environment for the seed elements 40.

Finally, a needling apparatus 86 is used to create the stitch bonding 60, to tighten and permanently connect the two envelope layers 22, 24 of the mat body. As displayed, in the shown embodiment the needling is omitted at the bulged sections 52 to prevent the seed elements 40 from being pierced and damaged.

Fig. 4 shows a flow diagram of a first embodiment of the method 100 of production of the seed mat 10.

The method commences with parametrization 102 of the chambers, wherein at least one parameter 104 of the chambers 50 is determined based on average plant sizes, average plant water demands, and/or typical plant space requirements of the seeds in the seed elements and/or seed element space requirements before and/or during germination and/or growth of the plant.

Subsequently, continuous production 106 of the mat body 20 is achieved via a roller system 80 comprising at least a first roller 82 with multiple dies 83 and/or knobs 83 adapted to the chambers 50 and the minimum distance D between the chambers 50. This may be achieved by feeding 114 at least two envelope layers 22, 24 into the roller system 80. The envelope layers 22, 24 are preferably fed separately into the roller system 80 and joined in the process.

The method involves forming 108 of the chambers 50 with the minimum distance D through rolling the mat body 20 with the first roller 82 having the multiple dies 83 and/or knobs 83 adapted to the minimum distance D. This may include forming 109 the chambers 50 in a first of the two envelope layers 22 and spanning 110 the other of the two envelope layers 24 over the first envelope layer 22.

During the continuous production 106 a filling 112 of the seed elements 40 into the chambers 50 takes place, wherein preferably a seed element injector 85 as shown in Fig. 3 is used. The seed elements 40 are preferably placed in bulged sections 52 of chambers 50 in one of the envelope layers 22, 24.

This may be followed by transferring 116 a transfer fibre 62 through the envelope layers 22, 24 by needling 117 the mat body 20 with needles creating a stitch bonding 60 between the two envelope layers 22, 24. This step might take place in particular after filling 112 of the seed elements 40 into the chambers 50 and joining the two envelope layers 22, 24.

Furthermore, the method 100 may involve slitting 118, perforating 118, and/or punching 118 the chambers via blades 84 and/or needles 84, particularly arranged on the at least one roller 82 with the multiple dies 83 and/or knobs 83 or on a separate roller or on or in other apparatus.

Finally, the method 100 may include spraying 120, soaking 121, dipping 122 and/or painting 123 the mat body 20, in particular the chambers 50 and/or peripheral sections 58 of the chambers, and/or fibres of the mat body 20 and/or plant seeds and/or seed elements at least partially with a covering agent 72 selected from a group comprising bacterial solution, algae solution, solution containing non-living charcoal, biochar, natural adhesives, enzymes, hormones, or life supplements to create the coating 70. In this particular embodiment of the method 100, the step of spraying 120, soaking 121, dipping 122 and/or painting 123 is conducted as the final step. However, this step may be implemented at any stage of the method 100.

After this process, the mat body 20 is preferably rolled up and shipped to the site of installation. The installation of the seed mat 10 may easily be carried out by rolling out the mat body 20 at the desired location. In this way, by using multiple seed mats 10 according to the invention, large surface areas of soil can be greened by simply arranging multiple seed mats 10 next to each other.

### References

- 10: seed mat

- 20: mat body
- 22: (first) envelope layer
- 24: (second) envelope layer
- 25: compacted layer
- 26: fibre matrix
- 27: fibre
- 28: non-woven
- 29: fleece structure

- 30: mat section

- 40: seed element
- 42: diaspore / plant seed
- 44: seed coating

- 50: chamber
- 52: bulged section
- 54: cover sections
- 56: breaking section
- 58: peripheral section

- 60: stitch bonding
- 62: transfer fibre
- 64: path

- 70: coating
- 72: covering agent
- 80: roller system
- 82: roller with multiple dies and/or knobs
- 83: dies / knobs
- 84: blades / needles
- 85: seed element injector
- 86: plain roller
- 88: needling apparatus

- 100: method for manufacturing
- 102: parametrizing
- 104: parameter
- 106: continuous production
- 108: forming of the chambers
- 109: forming bulged sections in the first envelope layer
- 110: spanning the other envelope layer
- 112: filling the seed elements
- 114: feeding
- 116: transferring
- 117: needling
- 118: slitting, perforating, punching
- 120: spraying
- 121: soaking
- 122: dipping
- 123: painting

- C1: dimension (diameter)
- C2: dimension (depth)
- D: minimum distance

## Claims

1. Seed mat (10) for controlled diaspore dispersal, especially for controlled dispersal of seeds or seed mixtures, comprising
a sheet-like mat body (20) with at least one mat section (30), and
multiple seed elements (40) having at least one diaspore (42) each,
**characterized in**
multiple chambers (50) distributed in the at least one mat section (30),
**in that** at least two of the multiple chambers (50) contain one or more seed elements (40), and
**in that** a minimum distance (D) is formed between adjacent chambers (50) containing a seed element and/or between closest chambers (50) containing a seed element.

2. Seed mat according to any one of the previous claims, **characterized,**
**in that** the mat body (20) comprises a non-woven (28), especially wherein the non-woven (28) comprises a fleece structure (29), and in that the non-woven contains a fibre matrix (26).

3. Seed mat according to any one of the previous claims, **characterized,**
**in that** the mat body comprises a fibre matrix (26) of plant and/or animal fibres, in particular the fibre matrix (26) consists of hemp and wool fibres, the fibre matrix (26) consisting of hemp and wool fibres and having a specific weight between 100 g/m² and 500 g/m², in particular 120 g/m² and 450 g/m².

4. Seed mat according to any one of the previous claims, **characterized,**
**in that** the mat body (20) comprises two envelope layers (22, 24), wherein one or both envelope layers (22, 24) form the chambers (50) and both envelope layers (22, 24) envelope the seed elements (40).

5. Seed mat according to claim 4, **characterized,**
**in that** at least one of the envelope layers (22) comprises a pre-shaped bulged section (52) to form a side of a chamber (50).

6. Seed mat according to one of claims 4 to 5, **characterized,**
**in that** the two envelope layers (22, 24) are connected by needling and/or stitch bonding (60), especially the stitch bonding (60) comprising fibres (62) of either one or both of the two envelope layers (22, 24),
in particular in that the stitch bonding (60) between the two envelope layers (22, 24) comprises at least 5 stitches / cm², in particular 25 stitches / cm², up to 100 stitches / cm².

7. Seed mat according to any one of the previous claims, **characterized,**
**in that** a dimension (C1, C2) of the chambers (50) has a size corresponding to the seed elements (40) to create a taut, snug and/or tight environment for the seed elements (40).

8. Seed mat according to any one of the previous claims, **characterized,**
**in that** the at least one chamber (50) has a predetermined breaking section (54).

9. Seed mat according to any one of the previous claims, **characterized,**
**in that** the mat body (20), in particular at least one of the chambers (50) and/or a peripheral section (56) of at least one of the chambers (50), and/or fibres (27) of the mat body (20) and/or surface-adjacent fibres of at least one of the chambers (50) and/or the seed elements (40) at least partially contain a coating (70) selected from the group comprising a structural coating and/or an organic coating and/or a bioactive coating and/or a microorganism coating and/or a supplementation, especially wherein the coating is covering at least one type of animal fibre and/or at least one type of plant fibre of at least a part of the mat body.

10. Method (100) for manufacturing a seed mat (10) according to any one of the previous claims, **characterized through the steps,**
- parametrizing (102) the chambers (50) and/or their distances from each other, wherein at least one parameter (104) of the chambers (50) and/or their distances from each other is determined on the basis of average plant sizes, average plant water demands, and/or space requirements during germination and/or growth,
- continuous production (106) of the mat body (20) via a roller system (80) comprising at least one roller (82) with multiple dies (83) and/or knobs (83) adapted to the at least one parameter (104) of the chambers (50) and the minimum distance (D) between the chambers (50),
- forming (108) of the chambers (50) with the minimum distance (D) in the mat body through rolling the mat body (20) with the at least one roller with the multiple dies (83) and/or knobs (83) adapted to the minimum distance (D),
- filling (112) the seed elements into the chambers (50).

11. Method according to claim 10, the continuous production (106) comprises feeding (114) at least two, especially exactly two, envelope layers (22, 24) into the roller system (80).

12. Method according to claim 11, comprising the additional step of transferring (116) transfer fibres (62) through the envelope layers by needling (117) with needles creating a stitch bonding (60) between the two envelope layers (22, 24), in particular after filling (112) of the seed elements (40) into the chambers (50), wherein the transfer fibres (62) are hooked fibres from fibre matrix (26) of one of the envelope layers (22, 24).

13. Method according to one of claims 11 or 12, wherein the step of forming (108) of the chambers (50) includes forming (109) bulged sections (52) of the chambers (50) in a first of the two envelope layers (22, 24) and spanning (110) the other of the two envelope layers (24) over the first envelope layer (22).

14. Method according to one of claims 10 to 13, comprising the additional step of slitting (118), perforating and/or punching the chambers (50) via blades and/or needles, in particular the blades and/or needles being arranged on the at least one roller with the multiple dies (83) and/or knobs (83).

15. Method according to one of claims 10 to 14, comprising the additional step of spraying (120) and/or soaking (121), dipping (122) and/or painting (123) the mat body (20), in particular the chambers (50) and/or the peripheral sections (58) of the chambers (50), and/or fibres of the mat body (20) and/or the diaspores (42) and/or the seed elements (40) at least partially with a covering agent (72) selected from a group comprising a bacterial solution, an algae solution, a solution containing non-living, charcoal, biochar and/or natural adhesives, in particular polysaccharides and/or proteins, a solution containing enzymes, a solution containing hormones and/or a solution containing life supplements to create a coating (70).
